# EUROPEAN PATENT SPECIFICATION

(11) **EP 4 604 769 B1**
(45) Date of publication and mention of the grant of the patent: **14.10.2026**
(21) Application number: 23790690.4
(22) Date of filing: 19.10.2023
(51) Int. Cl.: A24F 40/40, A24F 40/95

(54) **AEROSOL GENERATING ASSEMBLY**
AEROSOLERZEUGUNGSANORDNUNG
ENSEMBLE DE GÉNÉRATION D'AÉROSOL

(30) Priority: 20.10.2022 EP 22202747
(43) Date of publication of application: 27.08.2025
(73) Proprietor: JT International SA, 1202 Genève (CH)
(72) Inventor: WRIGHT, Alec, GUILDFORD SURREY GU2 7SU (GB); FLAVARD, Xavier, 75012 PARIS (FR); PILATOWICZ, Grzegorz Aleksander, 1274 GRENS (CH); GARCIA GARCIA, Eduardo Jose, 1218 GRAND-SACONNEX (CH)
(74) Representative: Lavoix
(86) International application number: PCT/EP2023/079148
(87) International publication number: WO 2024/083981

(56) References cited:
- EP-A1- 3 571 941
- WO-A1-2018/190600
- WO-A2-2013/102611

## Description

### FIELD OF THE INVENTION

The present invention relates to an aerosol generating assembly comprising an aerosol generating device and a charging unit.

The aerosol generating device of the assembly according to the invention is configured to operate with an aerosol generating substrate which presents for example a solid substrate able to form aerosol when being heated. Thus, such type of aerosol generating devices, also known as heat-not-burn devices, is adapted to heat, rather than burn, the substrate by conduction, convection and/or radiation, to generate aerosol for inhalation.

The charging unit of the assembly according to the invention is configured to provide a power supply to the aerosol generating device, for example for recharging a charge storage module of said device.

### BACKGROUND OF THE INVENTION

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat or warm vaporizable substances as opposed to burning tobacco in conventional tobacco products.

A commonly available reduced-risk or modified-risk device is the heated substrate aerosol generation device or heat-not-burn device. Devices of this type generate aerosol or vapour by heating an aerosol substrate, also known as aerosol generating substrate, that typically comprises moist leaf tobacco or other suitable vaporizable material to a temperature typically in the range 150°C to 350°C. Heating an aerosol substrate, but not combusting or burning it, releases aerosol that comprises the components sought by the user but not the toxic and carcinogenic by-products of combustion and burning. Furthermore, the aerosol produced by heating the tobacco or other vaporizable material does not typically comprise the burnt or bitter taste resulting from combustion and burning that can be unpleasant for the user and so the substrate does not therefore require the sugars and other additives that are typically added to such materials to make the smoke and/or vapour more palatable for the user.

Such devices require a power supply in order to heat the aerosol substrates. To this end, these aerosol generating devices are often part of an aerosol generating assembly, wherein the assembly comprises an aerosol generating device and a charging unit. This allows charging the device from the charging unit, thus allowing a user to charge the aerosol generating device from any location. This improves portability of the device, without requiring a bulky aerosol generating device since the charging unit is separated from the aerosol generating device.

WO2013102611A2-A discloses such an aerosol generating assembly, comprising a aerosol generating device and a charging unit.

Known devices are however not entirely satisfying. Indeed, the electrical connection between the aerosol generating device and the charging unit does not allow transferring enough power between said device and unit, in particular for the most power demanding aerosol generating devices. The mechanical interface between the aerosol generating device and the charging unit of the known assemblies is furthermore not reliable enough, leading to unexpected uncoupling between the aerosol generating device and the charging unit. Not only does this damages the user experience since this can result in unexpected interruption of the charge of the aerosol generating device, but this can also be dangerous for the user.

### SUMMARY OF THE INVENTION

One of the aims of the invention is therefore to provide an aerosol generating assembly that improves the user experience and the safety for the user. Another aim is to provide an assembly that can cater for the energy requirement of the most energy demanding aerosol generating devices.

For this purpose, the invention relates to an aerosol generating assembly comprising an aerosol generating device and a charging unit;
the aerosol generating device comprising a device locking mechanism and a device housing extending along a device axis and comprising:
   - a heating chamber configured to receive and heat a flat-shaped tobacco article; and
   - a first charge storage module configured to power the heating chamber;
the charging unit comprising a charger locking mechanism and a charger housing comprising a second charge storage module configured to charge the first charge storage module and power the heating chamber;
characterized in that the device locking mechanism is configured to be engaged with the charger locking mechanism to attach the aerosol generating device to the charging unit, and disengaged from the charger locking mechanism by twisting and/or sliding;
and in that one of the locking mechanisms comprises at least one lug protruding from the corresponding housing and comprising at least one electrode, and the other locking mechanism comprises at least one slot:
   - configured to receive and fix said lug; and
   - comprising an electrode designed to be in contact with said electrode of said lug to connect electrically the first charge storage module to the second charge storage module and/or the heating chamber.

Such an assembly comprising a device locking mechanism configured to be disengaged from the charger locking mechanism by twisting and/or sliding is especially advantageous since this prevents unexpected detachment of the aerosol generating device from the charging unit, that could for example otherwise happen by simply pulling the aerosol generating device away from the charging unit. The twisting and/or sliding remains however intuitive for a user, so that the user can simply detach the aerosol generating device from the charging unit. Having one of the locking mechanisms comprising one lug comprising one electrode, and the other locking mechanism comprising at least one slot comprising an electrode configured to be in contact with the electrode of the lug ensures the electrical connection between the aerosol generating device and the charging unit through the locking mechanism. This allows having a reliable electrical connection that safely allows a high power transfer between the aerosol generating device and the charging unit.

The invention is particularly advantageous for an aerosol generating device requiring a relatively important amount of power. This if for example the case of an aerosol generating device having ceramic heaters or other type of powerful heaters, configured for example to heat a flat-shaped tobacco article. In this case, a power supply comprised between 1.5 V and 9 V, and 5 A and 30 A is usually required.

According to some embodiments, the device locking mechanism is arranged on a side wall formed by the device housing and the charger locking mechanism is arranged on a side wall formed by the charger housing.

Thanks to this feature, the assembly is especially compact while allowing a simple detachment of the aerosol generating device from the charging unit. In particular, the aerosol generating device is easily accessible when it is attached to the charging unit.

According to some embodiments, the lug is configured to be disengaged from the slot by sliding the lug along the slot and by removing the lug from an opening of said slot.

Thanks to this feature, the aerosol generating device remains attached to the charging unit as long as the lug is not slid to the opening. This improves attachment between the charging unit and the aerosol generating device and further prevents unexpected detachments of the aerosol generating device from the charging unit.

According to some embodiments, the slot further comprises an abutting cavity configured to receive the lug; the lug is further configured to be disengaged from the abutting cavity by pushing or pulling before sliding along the slot.

Thanks to this feature, the lug is disengaged from the abutting cavity by a pushing or pulling movement, that differs from the sliding movement. This feature thus prevents unintentional sliding of the lug in the slot, thus further improving safety of the assembly.

According to some embodiments, the lug is configured to be slid along the slot according to the device axis and be removed from the opening of the slot according to a transversal axis perpendicular to the device axis.

Thanks to this feature, the movement to remove the lug from the slot differs from the sliding movement, thus preventing unintentional removing of the lug from the slot. This feature also allows for an especially intuitive removing of the lug from the slot.

According to some embodiments, one of the locking mechanisms comprises two lugs protruding from the corresponding housing and the other locking mechanism comprises two slots, each slot being configured to receive and fix a respective lug.

Such a locking mechanism further improves attachment between the aerosol generating device and the charging unit.

According to some embodiments, each lug comprises an electrode designed to be in contact with an electrode arranged in the corresponding slot when the lug is engaged with said slot.

Thanks to this feature, the electrical connection between the aerosol generating device and the charging unit can be entirely provided by the locking mechanism.

According to some embodiments, each lug comprises a unique electrode designed to be in contact with a unique electrode arranged in the corresponding slot when the lug is engaged with said slot.

Thanks to this feature, the electrical connection is only ensured when the aerosol generating device is properly attached to the charging unit, thus further improving safety of the assembly.

According to some embodiments, the device locking mechanism comprises the or each lug and the charger locking mechanism comprises the or each slot.

Thanks to this feature, the charging unit, that is for example intended to be in a pocket of the user during the use of the aerosol generating device, does not comprises protruding lugs, thus preventing any damages that could be realized by such lugs during the use of the aerosol generating device.

According to some embodiments, the lugs are arranged according to the device axis.

Thanks to this feature, the assembly is especially compact, the locking mechanism being arranged along the device axis.

According to some embodiments, the aerosol generating device is configured to carry out a pre-heating phase of the flat-shaped tobacco article when the device locking mechanism is engaged with the charger locking mechanism.

Thanks to this feature, the second charger unit can be used by the aerosol generating device during the pre-heating phase. This allows saving energy of the first charge storage module during the pre-heating and/or a more efficient pre-heating.

According to some embodiments, the device locking mechanism is configured to be engaged with the charger locking mechanism by twisting and/or sliding.

Thanks to this feature, the engaging of the device locking mechanism is especially easy and intuitive.

### BRIEF DESCRIPTION OF THE DRAWINGS

The invention and its advantages will be better understood upon reading the following description, which is given solely by way of non-limiting examples and which is made with reference to the appended drawings, in which:
- Figure 1 is a schematic view of the assembly of the invention, wherein the aerosol generating device is detached from the charging unit;
- Figure 2 is a schematic view of the assembly of figure 1, wherein the aerosol generating device in a first position during its attachment/detachment to/from the charging unit;
- Figure 3 is a schematic view of the assembly of Figures 1 and 2, wherein the aerosol generating device in a second position during its attachment/detachment to/from the charging unit;
- Figure 4 is a schematic view of the assembly of the invention, wherein the aerosol generating device is attached to the charging unit;
- Figure 5 is a schematic representation of a tobacco article configured to be received in the aerosol generating device of Figures 1 to 4;
- Figure 6 is a schematic view of the charger locking mechanism and of the device locking mechanism of the assembly of Figure 1 to 4 ; and
- Figure 7 is a schematic view of another embodiment of the charger locking mechanism and of the device locking mechanism.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term "aerosol generating device" or "device" may include a vaping device to deliver an aerosol to a user, including an aerosol for vaping, by means of a heater element explained in further detail below. The device may be portable. "Portable" may refer to the device being for use when held by a user. The device may be adapted to generate a variable amount of aerosol, e.g. by activating the heater element for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapour to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term "aerosol" may include a suspension of vaporizable material as one or more of: solid particles; liquid droplets; gas. Said suspension may be in a gas including air. Aerosol herein may generally refer to/include a vapour. Aerosol may include one or more components of the vaporizable material.

As used herein, the term "vaporizable material" or "precursor" may refer to a smokable material which may for example comprise nicotine or tobacco and an aerosol former. Tobacco may take the form of various materials such as shredded tobacco, granulated tobacco, tobacco leaf and/or reconstituted tobacco. Suitable aerosol formers include: a polyol such as sorbitol, glycerol, and glycols like propylene glycol or triethylene glycol; a non-polyol such as monohydric alcohols, acids such as lactic acid, glycerol derivatives, esters such as triacetin, triethylene glycol diacetate, triethyl citrate, glycerin or vegetable glycerin. In some embodiments, the aerosol generating agent may be glycerol, propylene glycol, or a mixture of glycerol and propylene glycol. The substrate may also comprise at least one of a gelling agent, a binding agent, a stabilizing agent, and a humectant.

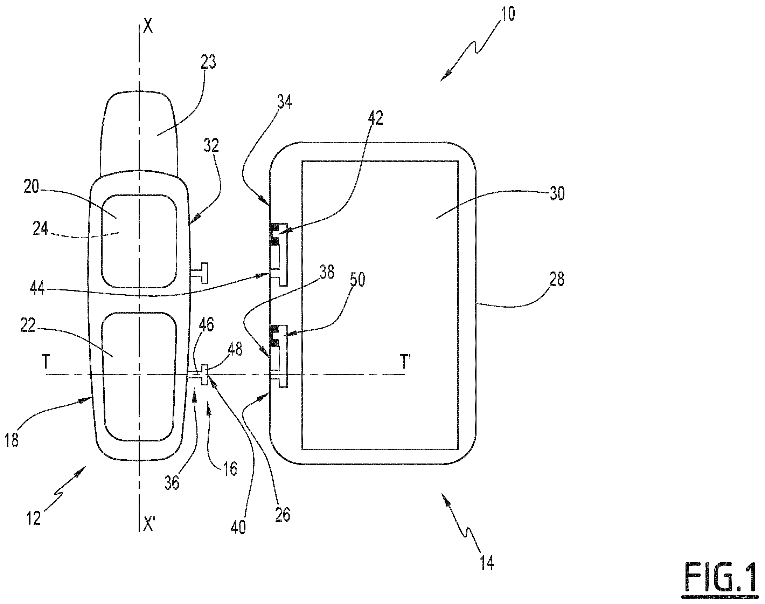

Referring to Figures 1 to 4, the aerosol generating assembly 10 comprises an aerosol generating device 12 and a charging unit 14.

As illustrated in Figures 1 to 4, the aerosol generating 12 device comprises a device locking mechanism 16 and a device housing 18.

The device housing 18 extends along a device axis X-X'. In particular, the device housing 18 is elongated along said device axis X-X'. The device housing 18 comprises a heating chamber 20 and a first charge storage module 22. By comprising the heating chamber 20 and the first charge storage module 22, it is for example here understood that the housing 18 houses the heating chamber 20 and the first charge storage module 22 of the aerosol generating 12. In the embodiment presented on Figures 1 to 4, the device housing 18 further comprises a mouthpiece 23.

The first charge storage module 22 is configured to power the heating chamber 20. The first charge storage module 22 is for example electrically connected to the heating chamber 20 and configured to provide electrical power to the heating chamber 20. The first charge storage module 22 comprises for example at least one battery cell and comprises for example a battery control unit (non represented). A capacity of the first charge storage module 22, that for example corresponds to the capacity of the at least one battery cell of said first charge storage module 22, is for example comprised between 200 mAh and 2000mAh, preferably between 300 mAh and 1000mAh.

The heating chamber 20 is configured to receive a flat shaped tobacco article 24. The shape of the heating chamber 20 is for example complementary to the shape of the flat shaped tobacco article 24. The shape of the heating chamber 20 is therefore sensibly flat, as this will for example be understood from the description of the shape of the tobacco article 24.

The heating chamber 20 is configured to heat the tobacco article 24. To that end, the heating chamber 20 for example comprises a resistive heating element (not illustrated). The heating chamber 20 is in particular configured to heat the tobacco article 24 received in the heating chamber 20 at a temperature comprised between 150°C and 350°C. At least some walls delimiting the heating chamber 20 can be in direct contact with the tobacco article 24 to heat it by conduction or can be spaced at least lightly to heat it by convection. According to another embodiment, instead of the resistive heating element, the heating chamber 20 comprises a coil intended to extend around the tobacco article 24 when it is inserted into the heating chamber 20. In this case, heating can be performed by magnetic interaction of the coil with susceptors comprised in the tobacco article 24.

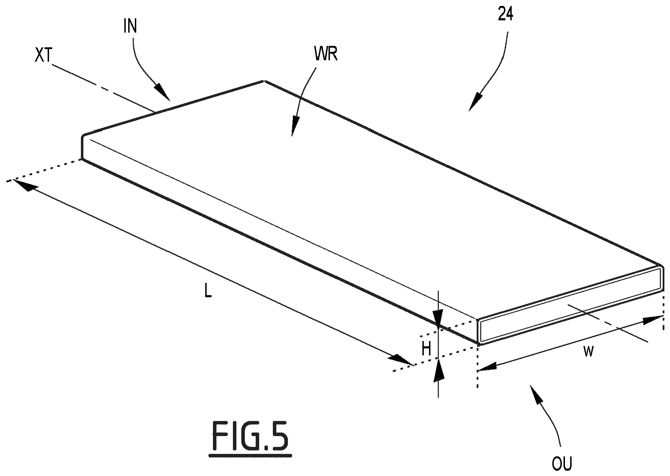

In reference to Figure 5, the shape of tobacco article 24 is for example a flat-shaped cuboid extending along an article axis XT between an inlet end IN and an outlet end OU, and having external dimensions LxWxH. The consumable article 24 is adapted to conduct an airflow from the inlet end IN to the outlet end OU as it will be explained in further detail below. In a typical example, the length L of the article 24 according to the article axis XT equals substantially to 25-35 mm, for example 33 mm while its width W is comprised between 8 and 15 mm, for example substantially equal to 12 mm and height H is comprised between 0,8 and 2 mm, for example is substantially equal to 1,2 mm. According to different examples, the values L, W and H can be selected within a range of +/- 40%, for example.

In the example of Figure 5, the tobacco article 24 is wrapped by a common wrapper WR. In other words, in this example, the wrapper WR is formed from a unique sheet wrapping substantially the whole length of the consumable article 24 around the article axis XT. In other examples, the wrapper WR extends only along a part of the length of the tobacco article 24. For example, the wrapper WR can extend only along the tobacco substrate of the tobacco article 24 and advantageously, wrap only the tobacco substrate. According to another example, the wrapper WR is formed from two different sheets wrapping separately for example the tobacco substrate and the support structure of the consumable article 24. The wrapper WR be made of aluminium and/or paper. The paper can be coated with an impermeable coating to prevent liquid absorption like cooking/backing paper. In some embodiments, when the wrapper WR is made of aluminium, it can wrap only the tobacco substrate to prevent condensation leakage and/or vapour leakage. Additionally, aluminium allows a better heat transfer.

As illustrated in Figures 1 to 4, the mouthpiece 23 is for example aligned with the outlet OU of the tobacco article 24 when the tobacco article 24 is received in the heating chamber 20. In some non-illustrated embodiments, a part of the tobacco article 24 forms a mouthpiece. The device housing 18 then does not comprise any distinct mouthpiece 23 and the mouthpiece is for example formed by a part of the tobacco article 24 that protrudes out of the device housing 18.

As illustrated in Figures 1 to 4, the charging unit 14 comprises a charger locking mechanism 26 and a charger housing 28.

The charger housing 28 comprises a second charge storage module 30. By comprising the second charge storage module 30, it is for example here understood that the charger housing 28 houses the second charge storage module 30 of the charging unit 14.

As this will be understood later, the second charge storage module 30 is configured to charge the first charge storage module 22 and to power the heating chamber 20 In some embodiments, the second charge storage module 30 is configured to power the heating chamber 20 directly, i.e. using a direct electrical connection to this chamber 20. According to other embodiments, the second charge storage module 30 is configured to power the heating chamber 20 indirectly, for example through the first charge storage module 22. The second charge storage module 30 comprises for example at least one battery cell and a battery control unit (non represented). A capacity of the second charge storage module 30, that for example corresponds to the capacity of the at least one battery cell of said second charge storage module 30, is for example higher than the capacity of the first charge storage module 22. The capacity of the second charge storage module 30 is for example comprised between 500 mAh and 5000 mAh, preferably between 1000 mAh and 3600mAh.

As this will be understood later, the second charge storage module 30 is for example configured to be connected to the first charge storage module 22 and/or to the heating chamber 20 through the device locking mechanism 16 and the charger locking mechanism 26.

In a particular embodiment, the aerosol generating device 12 is configured to carry out a pre-heating phase of the flat-shaped tobacco article 24 when the device locking mechanism 16 is engaged with the charger locking mechanism 26. In this embodiment, the heating chamber 20 is for example configured to be powered, at least partially, directly or indirectly by the second charge storage module 30. The aerosol generating device 12 and/or the charging unit 14 comprise(s) for example a user interface (not represented) that allows controlling the powering of the heating chamber 20.

As visible from Figures 1 to 4, the device locking mechanism 16 is for example arranged on a side wall 32 formed by the device housing 16. In the example of Figures 1 to 4, the side wall 32 formed by the device housing 16 is substantially parallel to the device axis X-X'. The charger locking mechanism 26 is for example arranged on a side wall 34 formed by the charger housing 18. As this will be exposed in more detail later, the side wall 32 formed by the device housing 16 faces for example the side wall 18 formed by the charger housing when the device locking mechanism 16 is engaged with the charger locking mechanism 26.

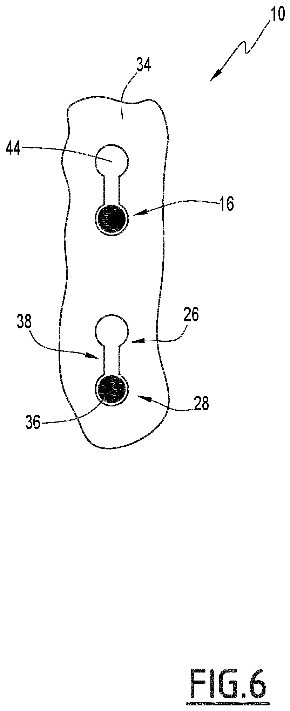

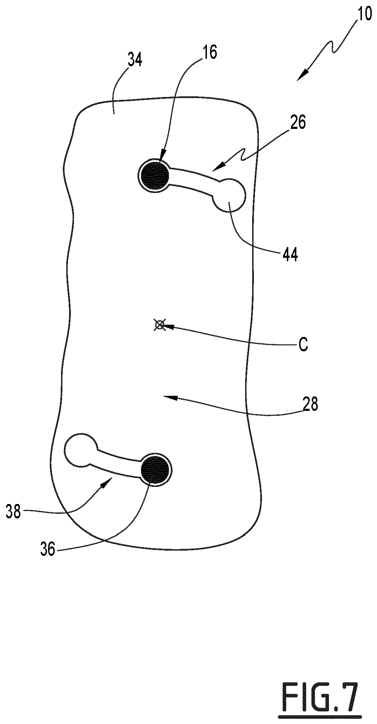

The device locking mechanism 16 is configured to be engaged with the charger locking mechanism 26 to attach the aerosol generating device 12 to the charging unit 14. The device locking mechanism 16 is for example configured to be engaged with the charger locking mechanism by twisting and/or sliding. In the embodiment of Figures 1 to 4, and as visible in Figure 6 showing a detail of this embodiment, the device locking mechanism 26 is configured to be engaged with the charger locking mechanism 26 by sliding. In an alternative embodiment shown in Figure 7, the device locking mechanism 26 is configured to be engaged with the charger locking mechanism 26 by twisting.

The device locking mechanism 16 is configured to be disengaged from the charger locking mechanism 26 to detach the aerosol generating device 12 from the charging unit 14. The device locking mechanism 16 is for example configured to be disengaged from the charger locking mechanism by twisting and/or sliding. In the embodiment of Figures 1 to 4, and as visible in Figure 6 showing a detail of this embodiment, the device locking mechanism 26 is configured to be disengaged with the charger locking mechanism 26 by sliding. In an alternative embodiment, shown in Figure 7 the device locking mechanism 26 is configured to be disengaged with the charger locking mechanism 26 by twisting.

One of the locking mechanisms 16, 26 comprises at least one lug 36 protruding from the corresponding housing 18, 28 and the other locking mechanism 16, 26 comprises at least one slot 38. For example, the device locking mechanism 16 comprises the or each lug 36 and the charger locking mechanism 26 comprises the or each slot 38. In particular, in the embodiments illustrated in Figures 1 to 4, 6 and 7, the device locking mechanism 16 comprises two lugs 36 protruding from the device housing 18 and the charger locking mechanism 26 comprises two slots 38.

The or each slot 38 is configured to receive and fix the or one of the lugs 36. In the example of Figures 1 to 4, the two slots 38 of the charger locking mechanism 26 are configured to receive and fix the lugs slots 36 of the device locking mechanism 16.

The lug 36 comprises at least one electrode 40. In the embodiments presented in Figures 6 and 7, each lug 36 comprises a unique electrode 40. The slot 38 comprises at least one electrode 42. It is understood that the expression "a slot 38 comprises an electrode 42" is for example employed when said electrode 42 is arranged in said slot 38, for example so that the electrode 42 can be reached from within the slot 38. Each slot 38 comprises for example a unique electrode 42. In alternative embodiments, at least one slot 38 comprises a plurality of electrodes 42 and/or at least one lug 36 comprises a plurality of electrodes 40. In a specific embodiment (non-illustrated), one slot 38 comprises for example two concentric electrodes 42, a corresponding lug 36 comprising two concentric electrodes 40.

The electrode 42 of the slot 38 is designed to be in contact with the electrode 40 of the lug 36 to connect electrically the first charge storage module 22 to the second charge storage module 30 and/or the heating chamber 20. In particular, when one of the locking mechanism 16, 26 comprise two slots 38 and the other mechanism comprises two lugs 36, each lug 36 comprises an electrode 40 designed to be in contact with an electrode 42 arranged in the corresponding slot 38 when said lug 36 is engaged with said slot 38. In the example of Figures 1 to 4, the unique electrode 40 of each lug 46 is designed to be in contact with the unique electrode 42 of each corresponding slot 38 when the lug 36 engaged with the slot 38.

As illustrated in Figures 1 to 4 and 6 to 7, the two lugs 36 of the device locking mechanism 16 are arranged according to the device axis X-X'. In other words, the two lugs 36 are aligned in a direction substantially parallel to the device axis X-X'.

In the examples of Figures 1 to 4 and 6 to 7, the slot 38 comprises an opening 44. The opening 44 corresponds for example to a portion of the slot wherein the width of the slot 38 is larger than the rest of the slot 38. In these examples, the lug 36 is configured to be disengaged from the slot by sliding the lug 36 along the slot 38 and by removing the lug from the opening 44.

The opening 44 is for example located at an end of the slot 38. In this embodiment of figures 1 to 4 and 6, each slot 38 extends substantially along an axis parallel to the device axis X-X' when the aerosol generating device 12 and the charging unit 14 are attached. The openings 44 are for example located at a similar end of the slots 38, and for example at an end of the slots 38 that is opposed to the mouthpiece 23 when the aerosol generating device 12 and the charging unit 14 are attached. In the example of figure 7, each slot 38 has an arc segment shape, the arc segment shapes being preferably concentric and centered around an arc center C. In this example, the openings 44 are for example diametrically opposed in respect to the arc center C.

As visible in Figures 1 to 4, the lug 36 comprises for example a neck 46 and a head 48, a section of the head 48 being superior to a section of the neck 46. The slot 38 then defines an inner volume in which the head can slide while being guided by the slot 38. The opening 44 has a bigger section than the section of the head 48, the head 48 being configured to be engaged/disengaged from the inner volume, that is, from the slot 38, by passing through the opening 44. In other words, the head 48 is locked in the inner volume defined by the slot as long as it slides in the slot 38, the head 48 being configured to be removed from the slot 38 through the opening 44.

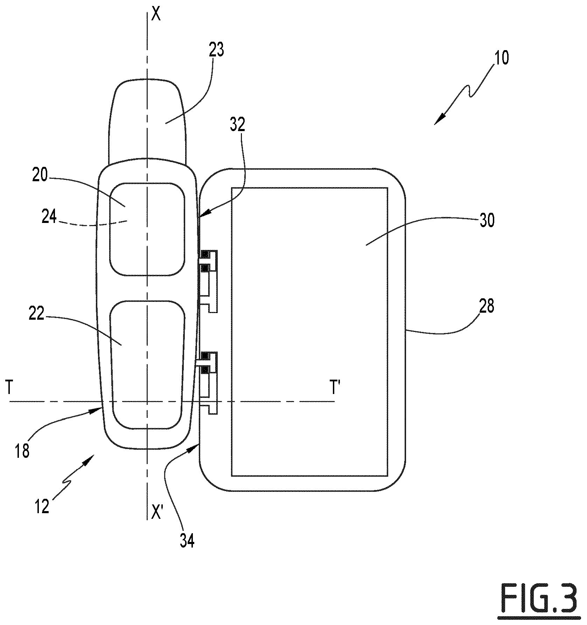

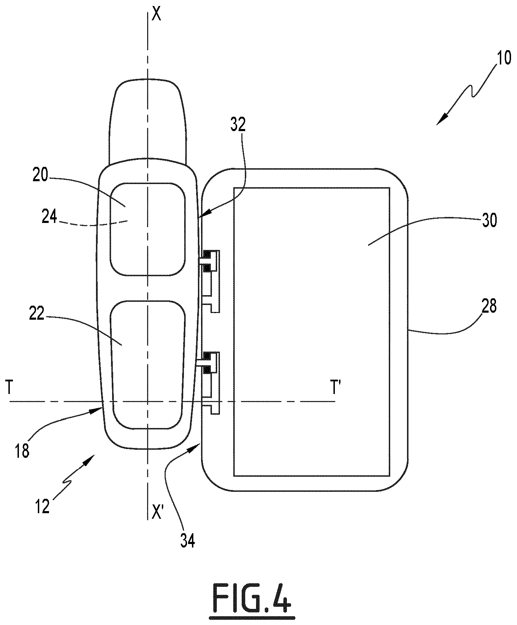

As illustrated in Figures 1 to 4, the slot 38 for example comprises an abutting cavity 50 configured to receive the lug 36. The abutting cavity 50 is for example more specifically configured to receive the head 48. The lug 36 is then configured to be disengaged from the abutting cavity 50 by pushing or pulling, before sliding the lug 36 along said slot. 38. In the example of Figures 1 to 4, the lug 36 of the device locking mechanism 16 is configured to be disengaged from the abutting cavity 50 by pushing the lug 36, that is by pushing the aerosol generating device 12, towards the charging unit 14 (see the movement of the lug 36 between figure 4 where the lug 36 is engaged in the abutting cavity and figure 3 where the lug 36 is disengaged from the cavity 50 without having been slid in the slot 38). In a specific embodiment, the slot 38 further comprises biasing means (non illustrated) configured to push the lug away from the charging unit 14. In this embodiment, the biasing means are for example configured to push the lug 36 in the abutting cavity 50.

The electrode 42 of the slot 38 is for example located in the abutting cavity 50. The electrode 40 of the lug 36 is then for example configured to be in contact with the electrode 40 of the lug 36 only when the lug 36 is engaged in the abutting cavity 50.

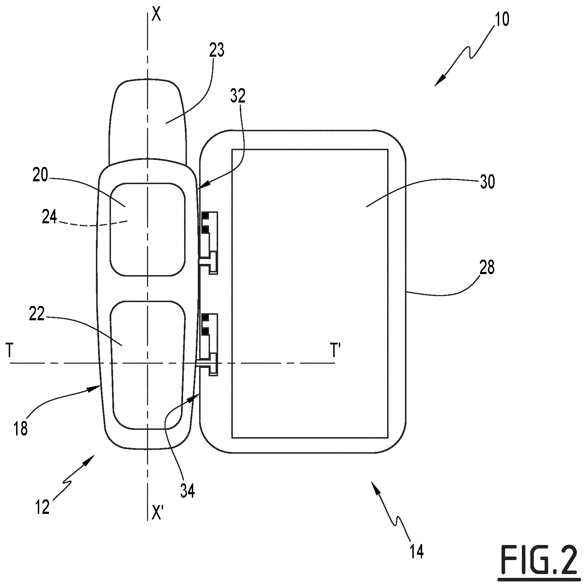

As illustrated in Figures 1 to 4 and in Figure 6, the lug 36 is for example configured to be slid along the slot 38 according to the device axis X-X' (see between first position illustrated in figure 2 and second position illustrated in figure 2) and to be removed from the opening 44 of said slot 38 according to a transversal axis T-T' perpendicular to the device axis X-X' (see figure 1 for when the lug 36 is removed from the opening 44). In the example of Figure 7, each lug 36 is for example configured to be slid along the slot 38 around the arc center, and to be removed from the opening 44 of said slot 38 according to a transversal axis perpendicular to the device axis X-X'.

A method of attaching an aerosol generating device 12 to a charging unit 14 of an aerosol generating assembly 10 as above described will now be presented.

In a first step, the lug 36 is inserted in the slot 38. In particular, in the examples of figures 1 to 4 and 6 to 7, the lugs 36 of the device locking mechanism 16 are inserted in the opening 44 of the slots 28 of the charger locking mechanism 26 (see in particular figure 2 where the assembly 10 is illustrated after the lug 36 is inserted in the slot 38).

In a second step, the lug 36 is slid in the slot 38 so that the device locking mechanism 16 is engaged to the charger locking mechanism 26 to attach the aerosol generating device 12 to the charging unit 14 (see in particular figure 3 where the assembly 10 is illustrated after the lug 36 is slid in the slot 38).

In the example of Figures 1 to 4 and Figure 6, the lugs 36 are slid along the slot 38 according to the device axis X-X'. In the example of figure 7, the lugs are slid around the arc center C.

In an optional third step, the lug 36 is further engaged in an abutting cavity 50 so that the device locking mechanism 16 is engaged to the charger locking mechanism 26 to attach the aerosol generating device 12 to the charging unit 14 (see in particular figure 4 where the assembly 10 is illustrated after the lug 36 is engaged in the abutting cavity 50). In the example of Figures 1 to 4 and Figures 6 and 7, the lug 36 is engaged in an abutting cavity 50 by pulling the aerosol generating device 12 away from the charging unit 14. As described above, in some embodiments, biasing means pull the aerosol generating device 12 away from the charging unit 14 so that the lug is engaged in the abutting cavity 50 once the lug 36 is slid in the slot 38.

Once the device locking mechanism 16 is engaged with the charger locking mechanism 26 to attach the aerosol generating device 12 to the charging unit 14, the electrode 40 of the lug 36 is for example in contact with the electrode 42 of the slot 38. That is, once the aerosol generating device 12 is attached to a charging unit 14, the electrode 40 of the lug 36 is in contact with the electrode of the slot 38 and connects electrically the first charge storage module 22 to the second charge storage module 30 and/or the heating chamber 20.

It is then clear that a method of detaching an aerosol generating device 12 to a charging unit 14 of an aerosol generating assembly 10 as above described comprises for example disengaging the lug 36 from the abutting cavity 50, then followed by sliding the lug 36 in the slot 38 and removing the lug 36 from the slot 38 through the opening 44.

## Claims

1. An aerosol generating assembly (10) comprising an aerosol generating device (12) and a charging unit (14);
the aerosol generating device (12) comprising a device locking mechanism (16) and a device housing (18) extending along a device axis (X-X') and comprising:
- a heating chamber (20) configured to receive and heat a flat-shaped tobacco article (24); and
- a first charge storage module (22) configured to power the heating chamber (20);
the charging unit (14) comprising a charger locking mechanism (26) and a charger housing (28) comprising a second charge storage module (30) configured to charge the first charge storage module (22) and power the heating chamber (20);
**characterized in that** the device locking mechanism (16) is configured to be engaged with the charger locking mechanism (26) to attach the aerosol generating device (12) to the charging unit (14), and disengaged from the charger locking mechanism (26) by twisting and/or sliding;
and **in that** one of the locking mechanisms (16, 26) comprises at least one lug (36) protruding from the corresponding housing (18, 28) and comprising at least one electrode (40, 42), and the other locking mechanism (16, 26) comprises at least one slot (38):
- configured to receive and fix said lug (36); and
- comprising an electrode (40, 42) designed to be in contact with said electrode of said lug (36) to connect electrically the first charge storage module (22) to the second charge storage module (30) and/or the heating chamber (20).

2. The aerosol generating assembly (10) according to claim 1, wherein the device locking mechanism (16) is arranged on a side wall (32) formed by the device housing (18) and the charger locking mechanism (26) is arranged on a side wall (34) formed by the charger housing (28).

3. The aerosol generating assembly (10) according to claim 1 or 2, wherein said lug (36) is configured to be disengaged from said slot (38) by sliding said lug (36) along said slot (38) and by removing said lug (36) from an opening (44) of said slot (38).

4. The aerosol generating assembly (10) according to claim 3, wherein:
- said slot (38) further comprises an abutting cavity (50) configured to receive said lug (36);
- said lug (36) is further configured to be disengaged from the abutting cavity (50) by pushing or pulling before sliding along said slot (38).

5. The aerosol generating assembly (10) according to claim 3 or 4, wherein said lug (36) is configured to be slid along said slot (38) according to the device axis and be removed from the opening (44) of said slot (38) according to a transversal axis (T-T') perpendicular to the device axis (X-X').

6. The aerosol generating assembly (10) according to any one of the preceding claims, wherein one of the locking mechanisms (16, 26) comprises two lugs (36) protruding from the corresponding housing (18, 28) and the other locking mechanism (16, 26) comprises two slots (38), each slot (38) being configured to receive and fix a respective lug (36).

7. The aerosol generating assembly (10) according to claim 6, wherein each lug (36) comprises an electrode (40) designed to be in contact with an electrode (42) arranged in the corresponding slot (38) when said lug (36) is engaged with said slot (38).

8. The aerosol generating assembly (10) according to claim 7, wherein each lug (36) comprises a unique electrode (40) designed to be in contact with a unique electrode (42) arranged in the corresponding slot (38) when said lug (36) is engaged with said slot (38).

9. The aerosol generating assembly (10) according to any one of the preceding claims, wherein the device locking mechanism (16) comprises the or each lug (36) and the charger locking mechanism (26) comprises the or each slot (38).

10. The aerosol generating assembly (10) according to claim 9 taken in combination with 6, wherein the lugs (36) are arranged according to the device axis (X-X').

11. The aerosol generating assembly (10) according to any one of the preceding claims, wherein the aerosol generating device (12) is configured to carry out a pre-heating phase of the flat-shaped tobacco article (24) when the device locking mechanism (16) is engaged with the charger locking mechanism (26).

12. The aerosol generating assembly (10) according to any one of the preceding claims, wherein the device locking mechanism (16) is configured to be engaged with the charger locking mechanism (26) by twisting and/or sliding.

## Patentansprüche

1. Aerosolerzeugungsanordnung (10), die eine Aerosolerzeugungsvorrichtung (12) und eine Ladeeinheit (14) umfasst;
wobei die Aerosolerzeugungsvorrichtung (12) einen Vorrichtungsverriegelungsmechanismus (16) und ein Vorrichtungsgehäuse (18), das sich entlang einer Vorrichtungsachse (X-X') erstreckt, umfasst und wobei das Vorrichtungsgehäuse Folgendes umfasst:
- eine Heizkammer (20), die dazu ausgelegt ist, einen flachen Tabakartikel (24) aufzunehmen und zu erwärmen; und
- ein erstes Ladungsspeichermodul (22), das dazu ausgelegt ist, die Heizkammer (20) mit Strom zu versorgen;
wobei die Ladeeinheit (14) einen Ladegerätverriegelungsmechanismus (26) und ein Ladegerätgehäuse (28), das ein zweites Ladungsspeichermodul (30), das dazu ausgelegt ist, das erste Ladungsspeichermodul (22) zu laden und die Heizkammer (20) mit Strom zu versorgen, umfasst, umfasst; **dadurch gekennzeichnet, dass** der Vorrichtungsverriegelungsmechanismus (16) dazu ausgelegt ist, mit dem Ladegerätverriegelungsmechanismus (26) in Eingriff gebracht zu werden, um die Aerosolerzeugungsvorrichtung (12) an der Ladeeinheit (14) anzubringen, und durch Verdrehen und/oder Schieben von dem Ladegerätverriegelungsmechanismus (26) gelöst zu werden;
und dadurch, dass einer der Verriegelungsmechanismen (16, 26) mindestens eine Nase (36), die aus dem entsprechenden Gehäuse (18, 28) hervorsteht, umfasst und mindestens eine Elektrode (40, 42) umfasst, und der andere Verriegelungsmechanismus (16, 26) mindestens einen Schlitz (38) umfasst:
- der zum Aufnehmen und Befestigen der Nase (36) ausgelegt ist; und
- der eine Elektrode (40, 42) umfasst, die dazu ausgelegt ist, mit der Elektrode der Nase (36) in Kontakt zu sein, um das erste Ladungsspeichermodul (22) mit dem zweiten Ladungsspeichermodul (30) und/oder mit der Heizkammer (20) elektrisch zu verbinden.

2. Aerosolerzeugungsanordnung (10) nach Anspruch 1, wobei der Vorrichtungsverriegelungsmechanismus (16) an einer Seitenwand (32) angeordnet ist, die durch das Vorrichtungsgehäuse (18) gebildet ist, und der Ladegerätverriegelungsmechanismus (26) an einer Seitenwand (34) angeordnet ist, die durch das Ladegerätgehäuse (28) gebildet ist.

3. Aerosolerzeugungsanordnung (10) nach Anspruch 1 oder 2, wobei die Nase (36) dazu ausgelegt ist, durch Verschieben der Nase (36) entlang des Schlitzes (38) und durch Entfernen der Nase (36) aus einer Öffnung (44) des Schlitzes (38) von dem Schlitz (38) gelöst zu werden.

4. Aerosolerzeugungsanordnung (10) nach Anspruch 3, wobei:
- der Schlitz (38) ferner einen angrenzenden Hohlraum (50) umfasst, der dazu ausgelegt ist, die Nase (36) aufzunehmen;
- die Nase (36) ferner so ausgelegt ist, dass sie durch Drücken oder Ziehen von dem angrenzenden Hohlraum (50) gelöst wird, bevor sie entlang des Schlitzes (38) gleitet.

5. Aerosolerzeugungsanordnung (10) nach Anspruch 3 oder 4, wobei die Nase (36) dazu ausgelegt ist, in Übereinstimmung mit der Vorrichtungsachse entlang des Schlitzes (38) verschoben zu werden und in Übereinstimmung mit einer Querachse (T-T') senkrecht zu der Vorrichtungsachse (X-X') aus der Öffnung (44) des Schlitzes (38) entfernt zu werden.

6. Aerosolerzeugungsanordnung (10) nach einem der vorhergehenden Ansprüche, wobei einer der Verriegelungsmechanismen (16, 26) zwei Nasen (36) umfasst, die von dem entsprechenden Gehäuse (18, 28) vorstehen, und der andere Verriegelungsmechanismus (16, 26) zwei Schlitze (38) umfasst, wobei jeder Schlitz (38) dazu ausgelegt ist, eine jeweilige Nase (36) aufzunehmen und zu befestigen.

7. Aerosolerzeugungsanordnung (10) nach Anspruch 6, wobei jede Nase (36) eine Elektrode (40) umfasst, die dazu ausgelegt ist, mit einer Elektrode (42), die in dem entsprechenden Schlitz (38) angeordnet ist, in Kontakt zu sein, wenn die Nase (36) mit dem Schlitz (38) in Eingriff steht.

8. Aerosolerzeugungsanordnung (10) nach Anspruch 7, wobei jede Nase (36) eine einzigartige Elektrode (40) umfasst, die dazu ausgelegt ist, mit einer einzigartigen Elektrode (42), die in dem entsprechenden Schlitz (38) angeordnet ist, in Kontakt zu sein, wenn die Nase (36) mit dem Schlitz (38) in Eingriff steht.

9. Aerosolerzeugungsanordnung (10) nach einem der vorhergehenden Ansprüche, wobei der Vorrichtungsverriegelungsmechanismus (16) die oder jede Nase (36) umfasst und der Ladegerätverriegelungsmechanismus (26) den oder jeden Schlitz (38) umfasst.

10. Aerosolerzeugungsanordnung (10) nach Anspruch 9 in Kombination mit 6, wobei die Nasen (36) in Übereinstimmung mit der Vorrichtungsachse (X-X') angeordnet sind.

11. Aerosolerzeugungsanordnung (10) nach einem der vorhergehenden Ansprüche, wobei die Aerosolerzeugungsvorrichtung (12) dazu ausgelegt ist, eine Vorheizphase des flachen Tabakartikels (24) durchzuführen, wenn der Vorrichtungsverriegelungsmechanismus (16) mit dem Ladegerätverriegelungsmechanismus (26) in Eingriff steht.

12. Aerosolerzeugungsanordnung (10) nach einem der vorhergehenden Ansprüche, wobei der Vorrichtungsverriegelungsmechanismus (16) dazu ausgelegt ist, durch Verdrehen und/oder Schieben mit dem Ladegerätverriegelungsmechanismus (26) in Eingriff zu kommen.

## Revendications

1. Ensemble générateur d'aérosol (10) comprenant un dispositif de génération d'aérosol (12) et une unité de charge (14) ;
le dispositif de génération d'aérosol (12) comprenant un mécanisme de verrouillage de dispositif (16) et un boîtier de dispositif (18) s'étendant le long d'un axe de dispositif (X-X') et comprenant :
- une chambre de chauffage (20) conçue pour recevoir et chauffer un article de tabac (24) de forme plate ; et
- un premier module de stockage de charge (22) conçu pour alimenter la chambre de chauffage (20) ;
l'unité de charge (14) comprenant un mécanisme de verrouillage de chargeur (26) et un boîtier de chargeur (28) comprenant un second module de stockage de charge (30) conçu pour charger le premier module de stockage de charge (22) et alimenter la chambre de chauffage (20) ; **caractérisé en ce que** le mécanisme de verrouillage de dispositif (16) est conçu pour venir en prise avec le mécanisme de verrouillage de chargeur (26) pour fixer le dispositif de génération d'aérosol (12) à l'unité de charge (14), et se dégager du mécanisme de verrouillage de chargeur (26) par torsion et/ou glissement ;
et **en ce que** l'un des mécanismes de verrouillage (16, 26) comprend au moins une languette (36) faisant saillie à partir du boîtier correspondant (18, 28) et comprenant au moins une électrode (40, 42), et l'autre mécanisme de verrouillage (16, 26) comporte au moins une fente (38) :
- conçue pour recevoir et fixer ladite languette (36) ; et
- comprenant une électrode (40, 42) conçue pour être en contact avec ladite électrode de ladite languette (36) pour connecter électriquement le premier module de stockage de charge (22) au second module de stockage de charge (30) et/ou à la chambre de chauffage (20).

2. Ensemble générateur d'aérosol (10) selon la revendication 1, dans lequel le mécanisme de verrouillage de dispositif (16) est disposé sur une paroi latérale (32) formée par le boîtier de dispositif (18) et le mécanisme de verrouillage de chargeur (26) est disposé sur une paroi latérale (34) formée par le boîtier de chargeur (28).

3. Ensemble générateur d'aérosol (10) selon la revendication 1 ou 2, dans lequel ladite languette (36) est conçue pour se dégager de ladite fente (38) en faisant glisser ladite languette (36) le long de ladite fente (38) et en retirant ladite languette (36) d'une ouverture (44) de ladite fente (38).

4. Ensemble générateur d'aérosol (10) selon la revendication 3, dans lequel :
- ladite fente (38) comprend en outre une cavité de butée (50) conçue pour recevoir ladite languette (36) ;
- ladite languette (36) est en outre conçue pour se dégager de la cavité de butée (50) par poussée ou tirage avant le glissement le long de ladite fente (38).

5. Ensemble générateur d'aérosol (10) selon la revendication 3 ou 4, dans lequel ladite languette (36) est conçue pour être glissée le long de ladite fente (38) suivant l'axe de dispositif et être retirée de l'ouverture (44) de ladite fente (38) suivant un axe transversal (T-T') perpendiculaire à l'axe de dispositif (X-X').

6. Ensemble générateur d'aérosol (10) selon l'une quelconque des revendications précédentes, dans lequel l'un des mécanismes de verrouillage (16, 26) comprend deux languettes (36) faisant saillie à partir du boîtier correspondant (18, 28) et l'autre mécanisme de verrouillage (16, 26) comprend deux fentes (38), chaque fente (38) étant conçue pour recevoir et fixer une languette respective (36).

7. Ensemble générateur d'aérosol (10) selon la revendication 6, dans lequel chaque languette (36) comprend une électrode (40) conçue pour être en contact avec une électrode (42) disposée dans la fente correspondante (38) lorsque ladite languette (36) est en prise avec ladite fente (38).

8. Ensemble générateur d'aérosol (10) selon la revendication 7, dans lequel chaque languette (36) comprend une électrode unique (40) conçue pour être en contact avec une électrode unique (42) disposée dans la fente correspondante (38) lorsque ladite languette (36) est en prise avec ladite fente (38).

9. Ensemble générateur d'aérosol (10) selon l'une quelconque des revendications précédentes, dans lequel le mécanisme de verrouillage de dispositif (16) comprend la ou chaque languette (36) et le mécanisme de verrouillage de chargeur (26) comprend la ou chaque fente (38).

10. Ensemble générateur d'aérosol (10) selon la revendication 9 prise en combinaison avec la revendication 6, dans lequel les languettes (36) sont disposées suivant l'axe de dispositif (X-X').

11. Ensemble générateur d'aérosol (10) selon l'une quelconque des revendications précédentes, dans lequel le dispositif de génération d'aérosol (12) est conçu pour exécuter une phase de préchauffage de l'article de tabac de forme plate (24) lorsque le mécanisme de verrouillage de dispositif (16) est en prise avec le mécanisme de verrouillage de chargeur (26).

12. Ensemble générateur d'aérosol (10) selon l'une quelconque des revendications précédentes, dans lequel le mécanisme de verrouillage de dispositif (16) est conçu pour venir en prise avec le mécanisme de verrouillage de chargeur (26) par torsion et/ou glissement.
